# EUROPÄISCHE PATENTSCHRIFT

(11) **EP 1 053 137 B1**
(45) Veröffentlichungstag und Bekanntmachung des Hinweises auf die Patenterteilung: **13.10.2004**
(21) Anmeldenummer: 98966379.4
(22) Anmeldetag: 18.12.1998
(51) Int. Cl.: B60R 22/46

(54) **BAUGRUPPE AUS EINEM GURTAUFROLLER UND EINEM GURTSTRAFFERANTRIEB**
MODULE COMPOSED OF A BELT RETRACTOR AND A BELT PRETENSIONING DEVICE
MODULE CONSTITUE D'UN ENROULEUR DE CEINTURE ET D'UN PRETENSIONNEUR DE CEINTURE

(30) Priorität: 05.02.1998 DE 29801946 U
(43) Veröffentlichungstag der Anmeldung: 22.11.2000
(73) Patentinhaber: TRW Automotive GmbH, 73553 Alfdorf (DE)
(72) Erfinder: WIER, Franz, D-73571 Göggingen (DE)
(74) Vertreter: Sties, Jochen, Dipl.-Ing.
(86) Internationale Anmeldenummer: PCT/EP1998/008349
(87) Internationale Veröffentlichungsnummer: WO 1999/039944

(56) Entgegenhaltungen:
- EP-A- 0 628 454
- EP-A- 0 649 779
- US-A- 5 397 075

## Beschreibung

Die Erfindung betrifft eine Baugruppe aus einem Gurtaufroller für einen Fahrzeug-Sicherheitsgurt, der auf einer Gurtspule des Gurtaufrollers aufgewickelt ist, einem Gurtstrafferantrieb, der eine Antriebsenergie bereitstellt, mittels der die Gurtspule des Gurtaufrollers in der Aufwickelrichtung angetrieben werden kann, und einem Getriebe, das den Gurtstrafferantrieb mit der Gurtspule koppelt, wie sie aus der EP-A-0 649 779 oder der EP-A-0 628 454 bekannt ist. Der Gurtstrafferantrieb wird im Bedarfsfall in bekannter Weise aktiviert, um die sogenannte Gurtlose im Sicherheitsgurtsystem zu beseitigen. Dies gewährleistet, daß ein Fahrzeuginsasse bei einem Fahrzeugaufprall ab dem frühestmöglichen Zeitpunkt an der Verzögerung des Fahrzeugs teilnimmt.

In herkömmlichen Gurtstrafferantrieben wird eine pyrotechnische Ladung verwendet, die gezündet werden kann und unter Druck stehendes Gas bereitstellt, das entweder auf einen translationsverschiebbaren Kolben oder einen Rotationskolben einwirkt. Die Bewegung des Kolbens wird in geeigneter Weise auf die Gurtspule übertragen, so daß diese in der Aufwickelrichtung gedreht wird. Zwischen Strafferantrieb und Gurtspule kann ein Getriebe angeordnet sein.

Problematisch bei den bekannten Gurtstraffern ist, daß es zu Beginn des Straffvorgangs, also kurz nach der Aktivierung der pyrotechnischen Ladung, zu extrem hohen Beschleunigungen der am Straffvorgang beteiligten Bauteile kommt. Aufgrund der wirkenden Massenträgheitskräfte, die dann überwunden werden müssen, sind die an der Kraftübertragung vom Kolben zur Gurtspule beteiligten Bauteile aus hochfestem Stahl hergestellt. Dies ist sowohl hinsichtlich des Gewichts als auch der Kosten nachteilig.

Die Erfindung schafft eine Baugruppe aus einem Gurtaufroller und einem Gurtstrafferantrieb, bei der die Belastungen der Bauteile im Verlauf der Gurtstraffung so beeinflußt werden können, daß extreme Werte vermieden werden. Dies wird gemäß der Erfindung dadurch erreicht, daß das Getriebe ein Zahnradgetriebe mit einem Antriebszahnrad und einem Abtriebszahnrad ist und ein Übersetzungsverhältnis bereitstellt, das sich während eines Straffvorgangs ändert. Mit einem solchen Getriebe kann durch die Verwendung von Verzahnungs-Teilkreisen, die von der herkömmlichen runden Form abweichen, eine variable Übersetzung erzielt werden, die an die jeweiligen Anforderungen angepaßt ist. Mit der variablen Übersetzung läßt sich die Umsetzung der von der pyrotechnischen Ladung bereitgestellten Antriebsenergie in eine Drehung der Gurtspule in solcher Weise beeinflussen, daß die Belastungen der an der Kraftübertragung beteiligten Bauteile deutlich verringert werden. Vorteilhaft ist insbesondere, wenn sich das Übersetzungsverhältnis ausgehend von dem Wert, der zu Beginn des Straffvorgangs vorliegt, während des Straffvorgangs zumindest anfänglich erhöht. Aufgrund des zunächst vergleichsweise geringen Übersetzungsverhältnisses wird zu Beginn des Straffvorgangs eine besonders geringe Belastung der an der Kraftübertragung beteiligten Bauteile erzielt. Die später ansteigende Übersetzung gewährleistet jedoch, daß im Ergebnis mindestens dieselbe Straffleistung wie mit herkömmlichen Systemen erzielt wird. Die Verminderung der Belastung der Bauteile führt dazu, daß für die im Getriebe verwendeten Zahnräder Leichtmetall oder sogar Kunststoff als Material verwendet werden kann. Hieraus ergeben sich neben Gewichts- und Kostenvorteilen auch geringere Massenträgheiten, was die Straffleistung weiter verbessert.

Gemäß einer anderen bevorzugten Ausführungsform ist vorgesehen, daß zwischen dem Gurtstrafferantrieb und der Gurtspule das Zahnradgetriebe und ein Zahnstangen/Zahnrad-Getriebe in Reihe gekoppelt angeordnet sind, wobei das Zahnstangen/Zahnrad-Getriebe aus einer Zahnstange, die die Antriebsseite des Getriebes bildet, und aus einem Zahnrad besteht, das die Abtriebsseite des Getriebes bildet, daß die Verzahnung der Zahnstange relativ zu ihrer Bewegungsrichtung gekrümmt verläuft und daß das Zahnrad bezüglich des Teilkreises seiner Verzahnung exzentrisch gelagert ist. Ein solches Zahnstangen/Zahnrad-Getriebe, das grundsätzlich aus der US-A-5,397,075 bekannt ist, ermöglicht es in besonders einfacher Weise, die von beispielsweise einem Linearantrieb bereitgestellte Antriebsenergie mit einem variablen Übersetzungsverhältnis zur Gurtspule zu übertragen. Die Zahnstange kann vorteilhafterweise auf der Außenfläche des Kolbens eines solchen Linearantriebs ausgebildet sein. Durch die Kombination des Zahnstangen/ Zahnrad-Getriebes mit dem Zahnradgetriebe, die jeweils ein sich änderndes Übersetzungsverhältnis bereitsstellen, läßt sich das Gesamtübersetzungsverhältnis in einem noch größeren Bereich an die jeweiligen Anforderungen anpassen.

Weitere vorteilhafte Ausgestaltungen der Erfindung ergeben sich aus den Unteransprüchen.

Die Erfindung wird nachfolgend unter Bezugnahme auf die beigefügten Zeichnungen beschrieben. In diesen zeigen:
- Figur 1 schematisch eine Baugruppe aus einem Gurtaufroller und einem Gurtstrafferantrieb;
- Figur 2 schematisch in der Ausgangsstellung ein Getriebe gemäß einer ersten Ausführungsform, das beim Gurtstrafferantrieb von Figur 1 verwendet werden kann und ein Antriebs- und ein Abtriebszahnrad enthält;
- Figur 3 für das Getriebe von Figur 2 eine Kurve des Übersetzungsverhältnisses über dem Drehwinkel;
- Figur 4 schematisch in der Ausgangsstellung ein Getriebe gemäß einer zweiten nicht erfindungsgemäßen Ausführungsform, das beim Gurtstrafferantrieb von Figur 1 verwendet werden kann und eine Zahnstange sowie ein in diese eingreifendes Zahnrad enthält;
- Figur 5 für das Getriebe von Figur 4 eine Kurve des Drehwinkels des Zahnrades über dem Weg der Zahnstange;
- Figur 6 für das Getriebe von Figur 4 eine Kurve des Weges der Zahnstange über dem Drehwinkel;
- Figur 7 eine Kurve von bei einem Straffvorgang erzielter Gurtbandkraft über gestraffter Gurtbandlänge für eine erfindungsgemäße Baugruppe und eine herkömmliche Baugruppe; und
- Figur 8 eine Kurve von bei einem Straffvorgang erzielter Beschleunigung über der Zeit für eine erfindungsgemäße Baugruppe und eine herkömmliche Baugruppe.

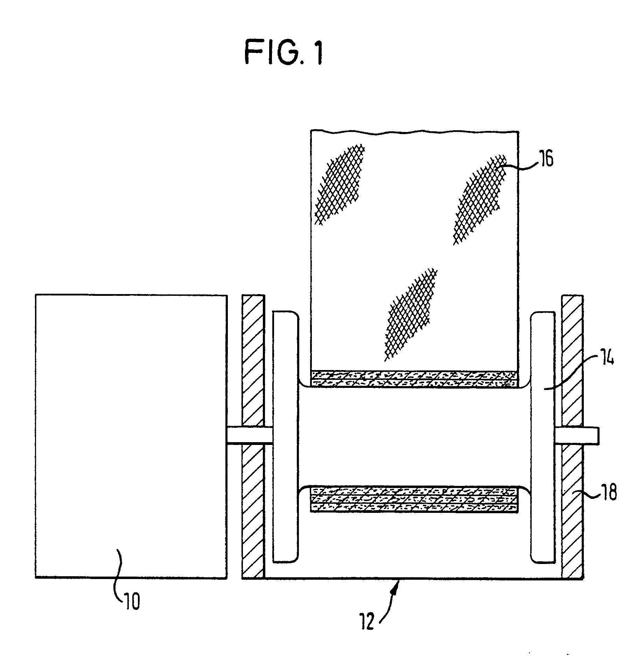

In Figur 1 ist schematisch eine erfindungsgemäße Baugruppe dargestellt. Diese besteht aus einem Gurtstrafferantrieb 10, der mit einem schematisch dargestellten Gurtaufroller 12 gekoppelt ist. Der Gurtaufroller 12 weist eine Gurtspule 14 auf, auf der der Fahrzeug-Sicherheitsgurt 16 aufgenommen werden kann. Die Gurtspule 14 ist in einem Rahmen 18 drehbar gelagert.

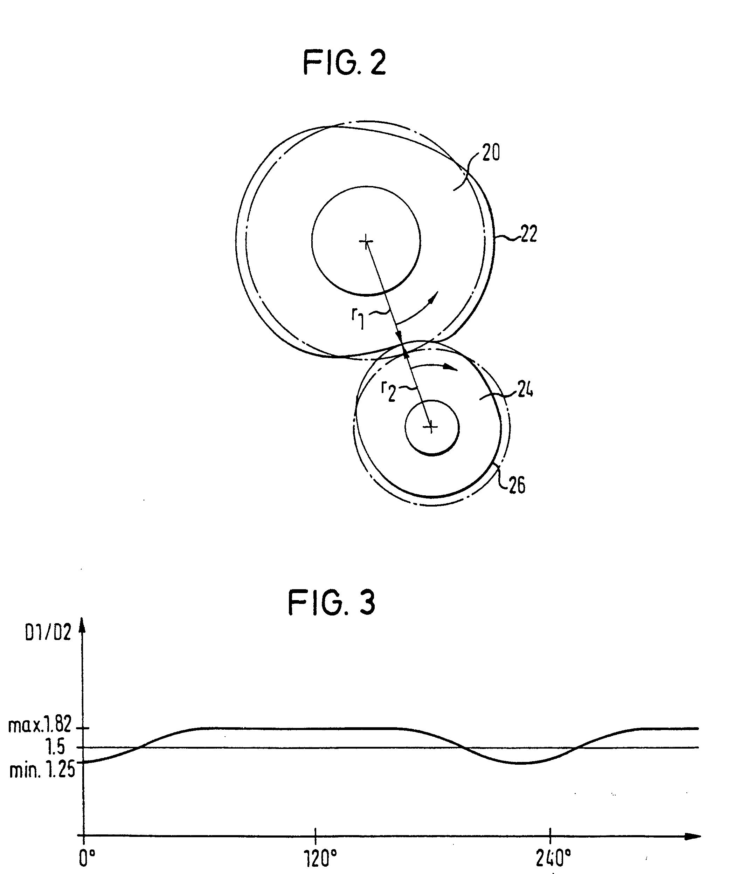

In Figur 2 ist schematisch in einer Ausgangsstellung vor einem Straffvorgang ein Getriebe gemäß einer ersten Ausführungsform dargestellt, das zwischen dem Gurtstrafferantrieb 10 und der Gurtspule 14 angeordnet ist. Das Getriebe enthält ein Zahnrad 20, das die Antriebsseite des Getriebes darstellt und dazu dient, die vom Gurtstrafferantrieb bereitgestellte Antriebsleistung abzugreifen, also beispielsweise eine Rotationsbewegung eines Rotationskolbens, der von einer pyrotechnischen Ladung beaufschlagt wird. Das Zahnrad 20 weist eine Verzahnung auf, die durch ihren Teilkreis 22 symbolisiert ist, der zwei abgeflachte Bereiche aufweist, in denen der Radius des Teilkreises kleiner ist als in den verbleibenden Bereichen. Zur Verdeutlichung des unrunden Verlaufs des Teilkreises 22 ist gestrichelt ein kreisförmiger Teilkreis dargestellt, wie er bei herkömmlichen Getrieben verwendet wird.

In die Verzahnung des Antriebszahnrades 20 greift ein Zahnrad 24 ein, das die Abtriebsseite des Getriebes darstellt und mit der Gurtspule 14 verbunden ist. Das Abtriebszahnrad 24 ist mit einer Verzahnung versehen, die durch einen Teilkreis 26 symbolisiert ist, der einen Bereich aufweist, in dem der Radius des Teilkreises größer ist als in den verbleibenden Bereichen. Auch hier ist zur Verdeutlichung des unrunden Verlaufs des Teilkreises 26 gestrichelt ein kreisförmiger Teilkreis dargestellt, wie er bei herkömmlichen Getrieben verwendet wird.

In der gezeigten Stellung, die der Stellung des Getriebes zu Beginn eines Straffvorgangs entspricht, liegt im Wälzpunkt ein Radius r₁ des Teilkreises des Antriebszahnrades 20 vor. Der Radius des Teilkreises des Abtriebszahnrades 24 im Wälzpunkt ist mit r₂ bezeichnet. Wenn das Antriebszahnrad aus dieser Ausgangsstellung heraus angetrieben wird, steigt der Radius r₁ des Teilkreises im Wälzpunkt zunächst an. Auf diese Weise wird der gewünschte Anstieg des Übersetzungsverhältnisses erhalten. Daran anschließend befindet sich der Wälzpunkt in den Bereichen des Antriebs- und des Abtriebszahnrades, in denen der Radius konstant bleibt. Hier ändert sich das Übersetzungsverhältnis nicht. Schließlich gelangt der Wälzpunkt in den Bereich des Antriebszahnrades, in welchem der Radius sich wieder verringert, was zu einer Verringerung des Übersetzungsverhältnisses führt.

In Figur 3 ist der sich ergebende Verlauf des Übersetzungsverhältnisses dargestellt. Bei einer Drehung des Antriebszahnrades aus der Ausgangsstellung heraus steigt das Übersetzungsverhältnis von einem Wert von 1,25 über einen Mittelwert von 1,5 hinaus auf einen Wert von 1,82 an. Dieser Wert ist dann über einen gewissen Drehwinkel konstant, bis er schließlich nach einer Drehung des Antriebszahnrades um etwa 165° wieder absinkt. Für einen vollständigen Straffvorgang wird einen Drehung des Antriebszahnrades um etwa 240° ausgenutzt, wobei der spezielle Wert sich jedoch in Abhängigkeit von den jeweiligen Gegebenheiten ändern kann.

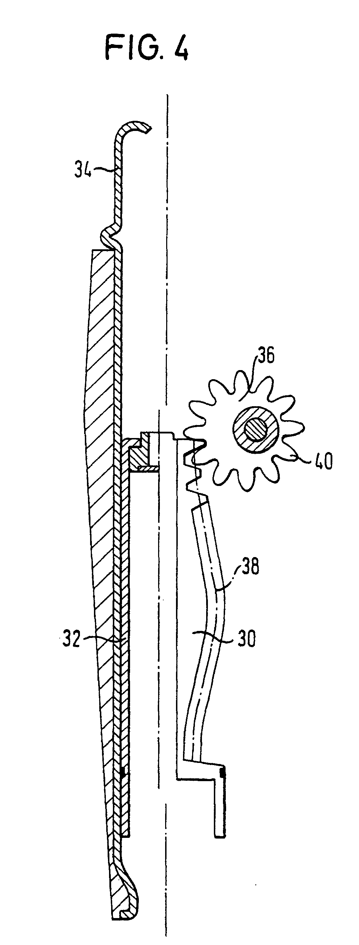

In Figur 4 ist schematisch in einer Ausgangsstellung vor einem Straffvorgang ein Getriebe gemäß einer zweiten, nicht erfindungsgemäßen Ausführungsform dargestellt, das zwischen dem Gurtstrafferantrieb 10 und de Gurtspule 14 angeordnet ist. Das Getriebe enthält eine Zahnstange 30, die die Antriebsseite des Getriebes darstellt und dazu dient, die vom Gurtstrafferantrieb bereitgestellte Antriebsleistung abzugreifen. Bei dieser Ausführungsform ist die Zahnstange auf der Außenseite eines Kolbens 32 angeordnet, der in einem Zylinder 34 translationsverschiebbar ist. Der Kolben und der Zylinder bilden zusammen einen Linearantrieb, mit dem die Energie beispielsweise einer pyrotechnischen Ladung in eine Translationsbewegung umgesetzt werden kann. Diese Translationsbewegung wird von einem Zahnrad 36, das in die Verzahnung der Zahnstange 30 eingreift und die Abtriebsseite des Getriebes bildet, in eine Rotationsbewegung umgesetzt, die dann zur Gurtspule übertragen wird.

Die durch ihren Teilkreis 38 symbolisierte Verzahnung der Zahnstange verläuft nicht parallel zur Verstellrichtung des Kolbens 32 im Zylinder 34, sondern weist im Bereich ihrer Mitte einen größeren Abstand von der Mittelachse des Kolbens auf als am Anfang bzw. am Ende. Das Abtriebszahnrad weist eine Verzahnung 40 mit kreisförmigem Teilkreis auf, ist aber relativ zu diesem exzentrisch gelagert. In der in Figur 4 gezeigten Ausgangstellung weist der Radius im Wälzpunkt den größten Wert auf. Wird der Kolben 32 ausgehend von der Ausgangsstellung im Zylinder 34 verschoben, nimmt der Radius im Wälzpunkt ab, bis er nach einer Verschiebung des Kolbens etwa um die Hälfte des maximalen Hubes einen Minimalwert erreicht. Bei einer weiteren Verschiebung steigt der Radius wieder an.

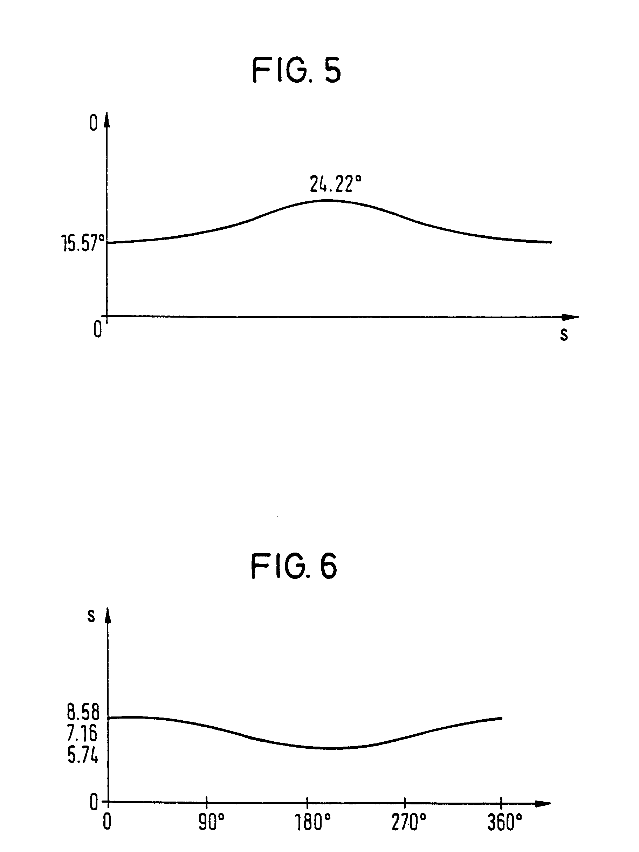

In Figur 5 ist eine Kurve des Drehwinkels des Zahnrades 36 über dem Weg s der Zahnstange 38 gezeigt. Die angegebenen Zahlenwerte sind auf eine Verschiebung der Zahnstange 38 und des Kolbens 32 um jeweils 3 mm bezogen. In der Ausgangsstellung führt somit eine Verschiebung des Kolbens 32 um 3 mm zu einer Verdrehung des Zahnrades 38 um 15,57°. Dieser Wert steigt bis auf einen Wert von 24,22° an, der etwa in der Mitte der Verzahnung der Zahnstange vorliegt.

In Figur 6 ist eine Kurve des Weges s der Zahnstange über dem Drehwinkel des Zahnrades 36 gezeigt. Die angegebenen Zahlenwerte sind auf eine Verdrehung des Zahnrades 36 um jeweils 10° bezogen. In der Ausgangsstellung führt somit eine Verdrehung des Zahnrades 36 um 10° zu einer Verschiebung des Kolbens 32 um 8,58 mm.

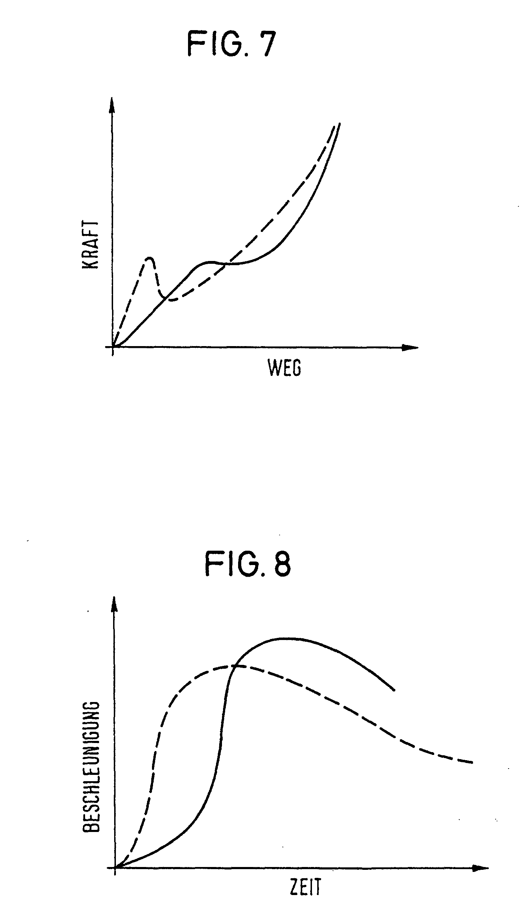

In den Figuren 7 und 8 sind Kurven angegeben, in denen verschiedenen Kennlinien für die im Gurtband wirkende Kraft und die wirkende Beschleunigung für einen erfindungsgemäßen Gurtstrafferantrieb und einen herkömmlichen Gurtstrafferantrieb gezeigt sind. In durchgehenden Linien sind dabei die Kennlinien für den erfindungsgemäßen Gurtstrafferantrieb gezeigt, während die Kennlinien für einen herkömmlichen Gurtstrafferantrieb gestrichelt gezeigt sind.

In Figur 7 ist die Verringerung der während des Straffvorgangs im Gurtband wirkenden Kraft im Vergleich zu einem herkömmlichen Straffvorgang besonders deutlich zu sehen. Insbesondere wird beim erfindungsgemäßen Gurtstraffer die zu Anfang des Straffvorgangs bei herkömmlichen Gurtstraffern sich ergebende Belastungsspitze beseitigt. Der Kraftanstieg ist beim erfindungsgemäßen Gurtstraffer sehr viel gleichmäßiger, und gegen Ende des Straffvorgangs werden dieselben Gurtbandkräfte erzielt.

In Figur 8 ist zu sehen, daß zu Beginn des Straffvorgangs, wie er von einem erfindungsgemäßen Gurtstraffer bereitgestellt wird, deutlich geringere Beschleunigungen vorliegen als bei einem herkömmlichen Straffvorgang. Erst im weiteren Verlauf des Straffvorgangs steigen die Beschleunigungswerte stark an; in diesem Bereich des Straffvorgangs, wenn sämtliche an der Kraftübertragung beteiligten Bauteile sich bereits in Bewegung befinden, sind hohe Beschleunigungswerte jedoch weit weniger kritisch. Aus diesem Grund kann in diesem Bereich des Straffvorgangs auch eine höhere Beschleunigung als bei herkömmlichen Gurtstraffern vorliegen.

## Patentansprüche

1. Baugruppe aus einem Gurtaufroller (12) für einen Fahrzeug-Sicherheitsgurt (16), der auf einer Gurtspule (14) des Gurtaufrollers (12) aufgewickelt ist, einem Gurtstrafferantrieb (10), der eine Antriebsenergie bereitstellt, mittels der die Gurtspule (14) des Gurtaufrollers (12) in der Aufwickelrichtung angetrieben werden kann, und einem Getriebe (20, 24; 30, 36), das den Gurtstrafferantrieb mit der Gurtspule koppelt, **dadurch gekennzeichnet, daß** das Getriebe (20, 24; 30, 36) ein Zahnradgetriebe mit einem Antriebszahnrad (20) und einem Abtriebszahnrad (24) ist und ein Übersetzungsverhältnis bereitstellt, das sich während eines Straffvorgangs ändert.

2. Baugruppe nach Anspruch 1, **dadurch gekennzeichnet, daß** die Verzahnung des Antriebszahnrades (20) einen Teilkreis (22) aufweist, dessen Radius im jeweiligen Eingriffspunkt sich, ausgehend von der Ausgangsstellung vor einem Straffvorgang, mindestens zunächst vergrößert.

3. Baugruppe nach Anspruch 1 oder Anspruch 2, **dadurch gekennzeichnet, daß** das Antriebszahnrad (20) und das Abtriebszahnrad (24) einen unrunden Teilkreis (22, 26) aufweisen.

4. Baugruppe nach Anspruch 3, **dadurch gekennzeichnet, daß** der Teilkreis (22) des Antriebszahnrades (20) in zwei Bereichen einen kleinerer Radius aufweist als in den übrigen Bereichen und daß der Teilkreis (26) des Abtriebszahnrades (24) in einem Bereich einen größeren Radius aufweist als in den übrigen Bereichen.

5. Baugruppe nach einem der Ansprüche 1 bis 4, **dadurch gekennzeichnet, daß** mindestens eines der Zahnräder aus Leichtmetall besteht.

6. Baugruppe nach einem der Ansprüche 1 bis 5, **dadurch gekennzeichnet, daß** mindestens eines der Zahnräder aus Kunststoff besteht.

7. Baugruppe nach einem der Ansprüche 1 bis 6, **dadurch gekennzeichnet, daß** zwischen dem Gurtstrafferantrieb (10) und der Gurtspule (14) das Zahnradgetriebe (20, 24) und ein Zahnstangen/Zahnrad-Getriebe (30, 36) in Reihe gekoppelt angeordnet sind, wobei das Zahnstangen/Zahnrad-Getriebe aus einer Zahnstange (30), die die Antriebsseite des Getriebes bildet, und aus einem Zahnrad (36) besteht, das die Abtriebsseite des Getriebes bildet, daß die Verzahnung (38) der Zahnstange (30) relativ zu ihrer Bewegungsrichtung gekrümmt verläuft und daß das Zahnrad (36) bezüglich des Teilkreises seiner Verzahnung (40) exzentrisch gelagert ist.

8. Baugruppe nach Anspruch 7, **dadurch gekennzeichnet, daß** die Zahnstange (30) auf der Außenfläche eines Kolbens (32) eines Linearantriebs ausgebildet ist.

## Claims

1. An assembly unit consisting of a belt retractor (12) for a vehicle seat belt (16) wound on a belt reel (14) of the belt retractor (12), a belt tensioner drive (10) providing a drive energy by means of which the belt reel (14) of the belt retractor (12) can be driven in the winding direction, and a gearing (20, 24; 30, 36) coupling the belt tensioner drive to the belt reel, **characterized in that** the gearing (20, 24; 30, 36) is a gearwheel system comprising a driving gear (20) and a driven gear (24) and providing a transmission ratio which changes during a tensioning process.

2. The assembly unit as set forth in claim 1, **characterized in that** the toothing of the driving gear (20) comprises a pitch circle (22) the radius of which at each point of mesh is increased at least initially, starting from the starting position prior to a tensioning process.

3. The assembly unit as set forth in claim 1 or claim 2, **characterized in that** the driving gear (20) and the driven gear (24) have an out-of-round pitch circle (22, 26).

4. The assembly unit as set forth in claim 3, **characterized in that** the pitch circle (22) of the driving gear (20) has two portions having a radius smaller than that of the remaining portions, and that the pitch circle (26) of the driven gear (24) has one portion having a radius larger than that of the remaining portions.

5. The assembly unit as set forth in any of claims 1 to 4, **characterized in that** at least one of the gears is made of a light metal.

6. The assembly unit as set forth in any of claims 1 to 5, **characterized in that** at least one of the gears is made of plastics.

7. The assembly unit as set forth in any of claims 1 to 6, **characterized in that** the gearwheel system (20, 24) and a rack and pinion gear (30, 36) are arranged coupled in series between the belt tensioner drive (10) and the belt reel (14), the rack and pinion gear consisting of a rack (30) forming the input side of the gearing and of a pinion (36) forming the output side of the gearing, that the toothing (38) of the rack (30) is curved relative to its direction of movement, and that the pinion (36) is eccentrically mounted with respect to the pitch circle of its toothing (40).

8. The assembly unit as set forth in claim 7, **characterized in that** the rack (30) is configured on the outer surface of a piston (32) of a linear drive.

## Revendications

1. Ensemble constitué par un enrouleur de ceinture (12) pour une ceinture de sécurité de véhicule (16) qui est enroulée sur une bobine (14) de l'enrouleur de ceinture (12), par un entraînement de prétensionneur (10) qui fournit une énergie d'entraînement au moyen de laquelle la bobine de ceinture (14) de l'enrouleur de ceinture (12) peut être entraînée en direction d'enroulement, et par une transmission (20, 24 ; 30, 36) qui accouple l'entraînement de prétensionneur à la bobine de ceinture, **caractérisé en ce que** la transmission (20, 24 ; 30, 36) est une transmission par engrenage avec une roue dentée menante (20) et une roue dentée menée (24) et fournit un rapport de multiplication qui varie pendant le processus de prétensionnement.

2. Ensemble selon la revendication 1, **caractérisé en ce que** la denture de la roue dentée menante (20) présente un cercle primitif de référence (22) dont le rayon au point d'attaque respectif augmente, au moins en premier lieu, en partant de la position initiale avant un processus de prétensionnement.

3. Ensemble selon la revendication 1 ou la revendication 2, **caractérisé en ce que** la roue dentée menante (20) et la roue dentée menée (24) présentent un cercle primitif de référence (22, 26) non circulaire.

4. Ensemble selon la revendication 3, **caractérisé en ce que** le cercle primitif de référence (22) de la roue dentée menante (20) présente dans deux régions un rayon plus petit que dans les autres régions, et **en ce que** le cercle primitif de référence (26) de la roue dentée menée (24) présente dans une région un rayon plus grand que dans les autres régions.

5. Ensemble selon l'une des revendications 1 à 4, **caractérisé en ce qu'**au moins une des roues dentées est en métal léger.

6. Ensemble selon l'une des revendications 1 à 5, **caractérisé en ce qu'**au moins une des roues dentées est en matière plastique.

7. Ensemble selon l'une des revendications 1 à 6, **caractérisé en ce que** l'engrenage (20, 24) et une transmission à crémaillère/roue dentée (30, 36) sont agencés en étant accouplés en série entre l'entraînement de prétensionneur (10) et la bobine de ceinture (14), la transmission à crémaillère/roue dentée étant constituée par une crémaillère (30) qui forme le côté menant de la transmission et par une roue dentée (36) qui forme le côté mené de la transmission, **en ce que** la denture (38) de la crémaillère (30) s'étend en courbe par rapport à sa direction de mouvement et **en ce que** la roue dentée (36) est montée excentrique par rapport au cercle primitif de référence de sa denture (40).

8. Ensemble selon la revendication 7, **caractérisé en ce que** la crémaillère (30) est réalisée sur la surface extérieure d'un piston (32) d'un entraînement linéaire.
